# EUROPÄISCHE PATENTSCHRIFT

(11) **EP 3 946 781 B1**
(45) Veröffentlichungstag und Bekanntmachung des Hinweises auf die Patenterteilung: **09.08.2023**
(21) Anmeldenummer: 20704277.1
(22) Anmeldetag: 07.02.2020
(51) Int. Cl.: B22F 3/115, B22F 10/22, B22F 12/53, B33Y 10/00, B33Y 30/00, B41J 2/04, B41J 2/14

(54) **VERFAHREN ZUR GENERATIVEN FERTIGUNG EINES DREIDIMENSIONALEN WERKSTÜCKS AUS EINER SCHMELZE**
PROCESS FOR ADDITIVE MANUFACTURING A THREE-DIMENSIONAL WORKPIECE FROM A MELT
PROCÉDÉ POUR LA FABRICATION ADDITIVE D'UNE PIÈCE TRIDIMENSIONNELLE À PARTIR D'UNE MASSE FONDUE

(30) Priorität: 01.04.2019 DE 102019204566
(43) Veröffentlichungstag der Anmeldung: 09.02.2022
(73) Patentinhaber: Robert Bosch GmbH, 70442 Stuttgart (DE)
(72) Erfinder: MAIER, Eberhard, 73257 Koengen (DE); BLEHER, Roland, 71726 Benningen (DE); VOEHRINGER, Peter, 70806 Kornwestheim (DE); SCHWEIZER, Benjamin, 72160 Horb (DE)
(86) Internationale Anmeldenummer: PCT/EP2020/053103
(87) Internationale Veröffentlichungsnummer: WO 2020/200552

(56) Entgegenhaltungen:
- CN-A- 103 785 834
- DE-A1-102016 224 047
- JP-A- 2018 090 866
- US-A1- 2002 111 707

## Beschreibung

Die vorliegende Erfindung betrifft ein Verfahren zur generativen Fertigung eines dreidimensionalen Werkstücks aus einer Schmelze, insbesondere Metallschmelze, gemäß dem Oberbegriff des Anspruchs 1.

Zu den generativen Fertigungsverfahren zählt insbesondere das 3D-Drucken, bei dem flüssige oder feste Werkstoffe schichtweise zu einem dreidimensionalen Werkstück aufgebaut werden. Vorliegend werden daher insbesondere ein Verfahren zum 3D-Drucken vorgeschlagen, wobei jedoch ausschließlich flüssige, und zwar verflüssigte Werkstoffe bzw. Schmelzen zum Einsatz gelangen sollen.

### Stand der Technik

Aus der Offenlegungsschrift DE 10 2016 224 047 A1 geht beispielhaft ein Druckkopf für einen 3D-Drucker, insbesondere einen Metalldrucker, hervor, der ein in einem Gehäuse ausgebildetes Reservoir zur Aufnahme des Metalls aufweist. Das Reservoir umfasst einen Schmelzbereich und einen Kompressionsraum für das geschmolzene bzw. verflüssigte Metall, wobei der Schmelzbereich und der Kompressionsraum derart verbunden sind, dass durch die Verschiebung eines Kolbens das verflüssigte Metall zum Durchtritt durch eine Austrittsöffnung angeregt wird. Das verflüssigte Metall wird dabei in Form von Tropfen ausgetragen.

3D-Druckverfahren, die Druckköpfe der vorstehend genannten Art einsetzen, werden auch "Drop-on-Demand"-Verfahren genannt. Dabei stellt die Reproduzierbarkeit der Tropfenbildung eine besondere Herausforderung dar.

Die Reproduzierbarkeit ist in der Regel nicht gegeben, wenn sich Gas, insbesondere Luft, im Kompressionsraum befindet, denn das Gas bzw. die Luft ist im Vergleich zur Schmelze sehr kompressibel. Da der Kolbenweg zum Austragen der Schmelze in der Regel nur wenige Mikrometer oder sogar weniger als ein Mikrometer beträgt, ist der Tropfenausstoß stark davon abhängig, wieviel des kompressiblen Mediums im Kompressionsraum vorhanden ist. Ggf. ist so viel Gas bzw. Luft im Kompressionsraum vorhanden, dass nicht einmal genügend Druck aufgebaut werden kann, um die Schmelze durch das Spritzloch zu pressen. Das Gas bzw. die Luft gelangt entweder während des Betriebs über das Spritzloch in den Kompressionsraum, dann liegt eine Fehlfunktion vor. Bei dem Gas bzw. der Luft kann es sich aber auch um eine bereits im Kompressionsraum vorhandene Restmenge handeln, die beim Befüllen des Kompressionsraums mit der Schmelze nicht vollständig verdrängt worden ist. Grund hierfür können kleine Ecken und/oder Hinterstiche sein, wobei die Benetzbarkeit der angrenzenden Oberflächen ebenfalls eine Rolle spielt.

Ferner offenbart die Anmeldung JP 2018 090866 A eine Vorrichtung zum Austragen von Metall, wobei geschmolzenes Metall mit Hilfe eines Impulsdrucks, ausgelöst durch einen piezoelektrischen Aktuator, ausgetragen wird.

US 2002/111707 A1 offenbart ein Herstellungsverfahren, dass zum Austragen von Tröpfchen geeignet ist, wobei ein Stempel in einem Schmelzeraum oszillierend angeordnet ist.

CN 103 785 834 A offenbart eine Vorrichtung zum Erzeugen von Metalltropfen, wobei die Vorrichtung einen piezoelektrischen Wandler, einen Schmelztiegel mit Heizelementen und Sprühdüse zum Ausbringen der Metalltropfen aufweist.

Ausgehend von dem vorstehend genannten Stand der Technik liegt der vorliegenden Erfindung die Aufgabe zugrunde, die Reproduzierbarkeit der Tropfenbildung bei der generativen Fertigung eines dreidimensionalen Werkstücks aus einer Schmelze, insbesondere Metallschmelze, zu verbessern.

Zur Lösung der Aufgabe wird das Verfahren mit den Merkmalen des Anspruchs 1 vorgeschlagen. Vorteilhafte Weiterbildungen der Erfindung sind den jeweiligen Unteransprüchen zu entnehmen.

### Offenbarung der Erfindung

Bei dem vorgeschlagenen Verfahren zur generativen Fertigung eines dreidimensionalen Werkstücks aus einer Schmelze, insbesondere Metallschmelze, wird die Schmelze einem Kompressionsraum zugeführt und mittels eines Druckpulses, der mit Hilfe eines den Kompressionsraum begrenzenden hin- und herbeweglichen Kolbens erzeugt wird, über ein Spritzloch in Tropfenform ausgetragen. Erfindungsgemäß wird vor Fertigungsbeginn und/oder in einer Fertigungspause der Kompressionsraum entgast. Dabei werden in einem ersten Schritt Ultraschallwellen in die im Kompressionsraum vorhandene Schmelze eingekoppelt, welche eine Kraft F_{Bjrk} erzeugen, die dazu führt, dass das in der Schmelze vorhandene Gas absinkt. Dabei wird ferner in einem zweiten Schritt, nach Beendigung der Ultraschall-Anregung, der Kolben tiefer in den Kompressionsraum eingefahren, um das dann aufsteigende Gas über eine Führung des Kolbens auszutragen.

Dadurch, dass bei dem erfindungsgemäßen Verfahren vor Fertigungsbeginn und/oder in einer Fertigungspause der Kompressionsraum entgast wird, ist der Kompressionsraum zumindest annähernd frei von stark kompressiblen Medien, wie beispielsweise Luft. Dadurch ist sichergestellt, dass zum einen der zum Austragen der Schmelze erforderliche Druck im Kompressionsraum aufgebaut werden kann und dass zum anderen gleichbleibende Tropfengrößen produziert werden. Das heißt, dass die geforderte Reproduzierbarkeit der Tropfenbildung gegeben ist.

Zum Entgasen des Kompressionsraums werden Ultraschallwellen, das heißt hochfrequente Schwingungen, in die Schmelze eingekoppelt. Diese überträgt die Schwingungen auf das in der Schmelze als Gasblase eingeschlossene und/oder an einer angrenzenden Oberfläche anhaftende Gas. Ist letzteres der Fall, wird das Gas über die Schwingungen zunächst von der Oberfläche gelöst, so dass sich eine in der Schmelze eingeschlossene Gasblase ausbildet. Auf eine in der Schmelze eingeschlossene Gasblase wirken während der Ultraschall-Anregung unterschiedliche Kräfte, die in der Summe dazu führen, dass die Gasblase absinkt. Das heißt, dass sie sich dem Spritzloch nähert. Wird anschließend die Ultraschall-Anregung beendet, steigt die Gasblase auf, wobei sie sich vom Spritzloch in Richtung des Kolbens bewegt.

Das Absinken der Gasblase während der Ultraschall-Anregung ist insbesondere auf eine Kraft F_{Bjrk} ("Bjerknes force") zurückzuführen. Wird die Ultraschall-Anregung beendet, fällt diese Kraft weg und eine Auftriebskraft F_{Buo} ("buoyancy force") führt schließlich dazu, dass die Gasblase in der Schmelze aufsteigt.

Um die in der Schmelze aufsteigende Gasblase auszutragen, wird dann in einem weiteren Verfahrensschritt der Kolben tiefer in den Kompressionsraum eingefahren. Sofern der Kolben bereits maximal ausgefahren ist, wird er zunächst in die umgekehrte Richtung bewegt, das heißt aus dem Kompressionsraum herausgezogen, und erst danach tiefer in den Kompressionsraum eingefahren. Der Kolbenhub kann dabei einen oder mehrere Millimeter betragen. Das heißt, dass das Austragen der Gasblase bzw. der Gasblasen nach der Ultraschall-Anregung mit Hilfe eines makroskopischen Kolbenhubs bewirkt wird.

Erfindungsgemäß werden die Ultraschallwellen mit Hilfe des hin- und herbeweglichen Kolbens in die Schmelze eingekoppelt. Der Kolben wird hierzu in eine hochfrequente Schwingung versetzt, vorzugsweise in eine Schwingung von etwa 20 KHz oder mehr. Der Kolben kann dabei eine Beschleunigung von 2.000 g oder mehr erfahren.

Erfindungsgemäß wird der Kolben mit Hilfe eines Aktors in Schwingung versetzt und/oder hin- und herbewegt wird.

Des Weiteren wird vorgeschlagen, dass der Kolben mit Hilfe eines magnetostriktiven, piezokeramischen und/oder magnetischen Aktors, in Schwingung versetzt und/oder hin- und herbewegt wird.

Sofern der Aktor lediglich dem Hin- und Herbewegen des Kolbens, insbesondere der Realisierung makroskopischer Kolbenhübe, dient, kann ein beliebiger Aktor gewählt werden. Zur Realisierung einer hochfrequenten Kolbenschwingung wird vorzugsweise ein piezokeramischer Aktor eingesetzt, da dieser besonders kleine Hübe und zugleich hohe Kräfte ermöglicht. Vorteilhafterweise werden das Hin- und Herbewegen des Kolbens zum Austragen der Schmelze durch das Spritzloch während der Fertigung eines dreidimensionalen Werkstücks und die hochfrequenten Schwingungen des Kolbens zum Einkoppeln von Ultraschallwellen vor Beginn der Fertigung und/oder in einer Fertigungspause mit demselben Aktor bewirkt. Derselbe Aktor kann ferner zur Realisierung eines makroskopischen Kolbenhubs eingesetzt werden, um nach der Ultraschall-Anregung in der Schmelze vorhandene Gasblasen auszutragen.

In Weiterbildung der Erfindung wird vorgeschlagen, dass vor der Ultraschall-Anregung die im Bereich des Spritzlochs vorhandene Schmelze heruntergekühlt wird, bis die Soliduslinie der Schmelze unterschritten wird. Das heißt, dass die Schmelze im Bereich des Spritzlochs soweit heruntergekühlt wird, dass sie erstarrt. Dadurch ist sichergestellt, dass vor Fertigungsbeginn keine Schmelze über das Spritzloch ausgetragen wird.

Bevorzugt wird die im Bereich des Spritzlochs vorhandene Schmelze mit molekularem Stickstoff (N₂) heruntergekühlt. Der molekulare Stickstoff (N₂) wird vorzugsweise mit Hilfe einer Lanze von außen an das Spritzloch herangeführt, so dass eine lokal begrenzte Kühlung erreicht wird. Das heißt, dass nach dem Entgasen des Kompressionsraums die erstarrte Schmelze schneller wieder verflüssigt werden kann.

Zur Durchführung des erfindungsgemäßen Verfahrens kann beispielsweise eine Vorrichtung einen mit einer Schmelze, insbesondere einer Metallschmelze, befüllbaren Kompressionsraum umfassen, der einerseits von einem hin- und herbeweglichen Kolben, andererseits von einem Keramikkörper mit einem Spritzloch zum Austragen der Schmelze begrenzt wird. Ferner umfasst die Vorrichtung einen Aktor, beispielsweise einen magnetostriktiven, piezokeramischen und/oder magnetischen Aktors, mit dessen Hilfe der Kolben in eine hochfrequente Schwingung versetzbar und/oder hin- und herbewegbar ist. Der Kolben der Vorrichtung weist dabei eine zumindest abschnittsweise konisch geformte Spitze zur Begrenzung des Kompressionsraums auf. Das heißt, dass die Spitze insbesondere kegelförmig oder kegelstumpfförmig geformt sein kann. Die zumindest abschnittsweise konisch geformte Spitze des Kolbens fördert beim Einfahren in den Kompressionsraum ein "Abstreifen" von Gasblasen, so dass diese sich leicht vom Kolben lösen und seitlich am Kolben entlang aufsteigen können, um dann über die Kolbenführung ausgetragen zu werden.

Vorzugsweise ist der Aktor ein piezokeramischer Aktor, mit dessen Hilfe der Kolben sowohl in eine hochfrequente Schwingung versetzbar als auch hin- und herbewegbar ist. In diesem Fall muss nur ein Aktor vorgesehen werden bzw. die Vorrichtung muss nicht um einen zusätzlichen Aktor erweitert werden, um das erfindungsgemäße Verfahren zum Entgasen des Kompressionsraums durchzuführen.

Das heißt, dass der Aktor bevorzugt hochfrequentfähig ist, so dass der Kolben mit Hilfe des Aktors in hochfrequente Schwingungen ≥ 20 KHz versetzbar ist.

Vorteilhafterweise ist der Kolben aus Keramik gefertigt und weist somit eine hohe Festigkeit auf. Die Verbindung des Kolbens mit dem Aktor ist vorzugsweise über eine Kolbenstange hergestellt, die insbesondere aus einem metallische Werkstoff hergestellt sein kann. Die Kolbenstange kann - je nach Länge - ein- oder mehrteilig ausgeführt sein. Bei einer mehrteiligen Ausführung sollte eine ausreichende Dehnlänge im Verbindungsbereich vorgehalten werden, um ein Lösen der Verbindung aufgrund thermisch bedingter Längenänderungen zu verhindern. Zugleich muss die Verbindung des Kolbens mit dem Aktor ausreichend steif sein, um den Kolben in eine hochfrequente Schwingung versetzen zu können. Zusätzlich können extra starke rückstellende Federn vorgesehen sein, die den Kolben gegen den Aktor vorspannen. Damit die hohen positiven wie negativen Beschleunigungen nicht zu unzulässigen Spannungen im Kolben führen, sollte darauf geachtet werden, dass nur Druckspannungen keine Zugspannungen in die Keramik eingeleitet werden. Ferner sollte auf scharfe Kanten, insbesondere auf ein Gewinde, im Krafteinleitungsbereich verzichtet werden.

Die Erfindung wird nachfolgend anhand der beigefügten Zeichnungen näher erläutert. Diese zeigen:
Fig. 1 einen schematischen Längsschnitt durch eine Vorrichtung zur generativen Fertigung eines dreidimensionalen Werkstücks aus einer Schmelze,
Fig. 2 einen vergrößerten Ausschnitt der Fig. 1 und
Fig. 3 eine schematische Darstellung der Kräfte, die auf eine Gasblase innerhalb einer Flüssigkeit wirken.

### Ausführliche Beschreibung der Zeichnungen

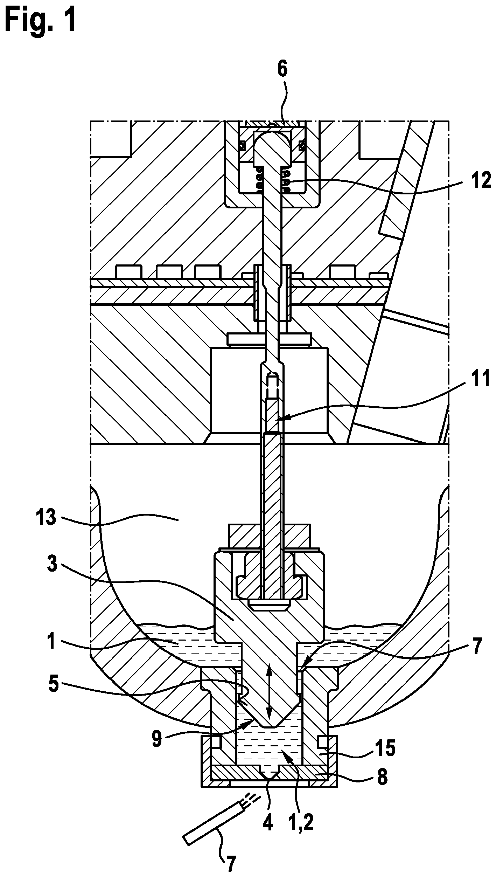

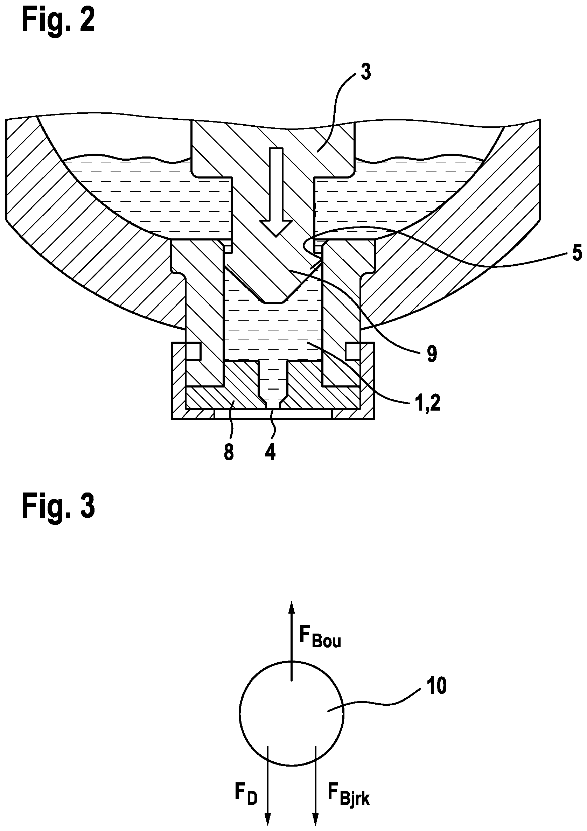

Den Figuren 1 und 2 ist beispielhaft eine Vorrichtung zur generativen Fertigung eines dreidimensionalen Werkstücks aus einer Schmelze 1, insbesondere aus einer Metallschmelze, zu entnehmen. Bei der Vorrichtung handelt es sich um einen 3D-Drucker bzw. um einen Druckkopf eines 3D-Druckers.

Bestandteile der Vorrichtung sind ein hin- und herbeweglicher Kolben 3, der einen Kompressionsraum 2 begrenzt. Der Kompressionsraum 2 ist mit der Schmelze 1 gefüllt. Durch die Hin- und Herbewegungen des Kolbens 3 (siehe Fig. 1, Pfeil im Kolben 3) werden Druckpulse erzeugt, die dazu führen, dass ein Teil der Schmelze 1 über ein Spritzloch 4 ausgetragen wird, das in einem den Kompressionsraum 2 begrenzenden Keramikkörper 8 ausgebildet ist. Der Keramikkörper 8, der vorliegend plattenförmig ausgebildet ist, ist über eine Spannhülse 14 mit einem hohlzylinderförmigen Gehäuseteil 15 verbunden, das den Kompressionsraum 2 in radialer Richtung begrenzt.

Das im Keramikkörper 8 ausgebildete Spritzloch 4 weist einen Durchmesser D auf, der kleiner als 500 µm ist. Das heißt, dass ein deutlicher Druckpuls erforderlich ist, um die Schmelze 1 durch das enge Spritzloch 4 zu drücken. Der Druckpuls wird mit Hilfe des Kolbens 3 erzeugt, der hierzu über eine mehrteilige Kolbenstange 11 mit einem piezokeramischen Aktor 6 verbunden ist. Über mindestens eine Feder 12 sind die Kolbenstange 11 und der Kolben 3 gegen den Aktor 6 vorgespannt.

Beim Austreten der Schmelze 1 aus dem Spritzloch 4 kommt es zur Ausbildung diskreter Tropfen, die an der Unterseite des Keramikkörpers 8 abreißen und sich im Freifall auf einen Werkstückträger (nicht dargestellt) zubewegen. Die Falllinie im Freifall entspricht dabei idealerweise der Längsachse des Spritzlochs 4, um ein genaue Platzierung der Tropfen auf dem Werkstückträger zu ermöglichen. Das zu fertigende dreidimensionale Werkstück wird somit Tropfen für Tropfen auf dem Werkstückträger aufgebaut.

Um die Schmelze 1 über das Spritzloch 4 aus dem Kompressionsraum 2 zu pressen, muss ein ausreichend hoher Druck bzw. Druckpuls aufgebaut werden. Dies ist nur möglich, wenn im Kompressionsraum 2 kein stark kompressibles Medium, wie beispielsweise Luft, vorhanden ist. Im Betrieb der Vorrichtung kann es jedoch dazu kommen, dass Luft von außen über das Spritzloch 4 angesaugt wird und somit unter den Kolben 3 gelangt. Diese Luft gilt es vor Inbetriebnahme der Vorrichtung zu entfernern.

Das heißt, dass - gemäß dem erfindungsgemäßen Verfahren - vor Beginn der eigentlichen Fertigung eines dreidimensionalen Werkstücks der Kompressionsraum 2 entgast wird. Hierzu wird der Kolben 3 in eine hochfrequente Schwingung versetzt, über die Ultraschallwellen in die Schmelze 1 eingekoppelt werden. Die Schmelze 1 überträgt die Schwingungen auf das eingeschlossene Gas, so dass dieses als Gasblase 10 in der Schmelze 1 absinkt. Das Absinken ist auf eine Kraft F_{Bjrk} zurückzuführen, die auf die Gasblase wirkt, und zwar entgegengesetzt zu einer Auftriebskraft F_{Bou}. Zugleich lösen sich etwaige an der Innenumfangsfläche des Gehäuseteils 15 anhaftende Gasblasen 10, die somit ebenfalls absinken. Wird anschließend die Ultraschall-Anregung beendet und der Kolben 3 tiefer in den Kompressionsraum 2 eingefahren (siehe Fig. 2, Pfeil im Kolben 3), wobei der Kolbenhub ein bis mehrere Millimeter betragen kann, steigen die Gasblasen 10 durch die Auftriebskraft F_{Bou} nach oben und werden über eine Führung 5 des Kolbens 3 aus dem Kompressionsraum 2 ausgetragen. Das Austragen der Gasblasen 10 wird durch die konisch geformte Spitze 9 des Kolbens 3 begünstigt.

Damit beim Einfahren des Kolbens 3 in den Kompressionsraum 2 keine Schmelze 1 über das Spritzloch 4 ausgetragen wird, wird die sich im Bereich des Spritzlochs 4 befindliche Schmelze 1 zuvor stark heruntergekühlt bzw. eingefroren. Hierzu wird der Bereich des Spritzlochs 4 von außen mit molekularem Stickstoff N₂ gespült, wobei zum Spülen eine Lanze 7 verwendet werden kann (siehe Fig. 1). Ist der Entgasungsprozess abgeschlossen, wird anschließend die gefrorene Schmelze 1 wieder erwärmt und verflüssigt, so dass mit der eigentlichen Fertigung des dreidimensionalen Werkstücks begonnen werden kann.

In der Fig. 3 sind beispielhaft die Kräfte dargestellt, die während der Einkopplung von Ultraschallwellen in eine Flüssigkeit auf eine in der Flüssigkeit eingeschlossene Gasblase 10 wirken. Zunächst wirkt eine Auftriebskraft F_{Bou} ("buoyancy force"), die ohne Ultraschall-Anregung dazu führen würde, dass die Gasblase 10 in der Flüssigkeit aufsteigt. Entgegengesetzt zur Auftriebskraft F_{Bou}, wirken eine Kraft F_{D} ("drag force") und eine Kraft F_{Bjrk} ("Bjerknes force"), die gemeinsam größer als die Auftriebskraft F_{Bou} sind, so dass die Gasblase 10 in der Flüssigkeit absinkt.

Dieses Phänomen macht sich die vorliegende Erfindung zunutze, wobei zum abschließenden Austragen der Gasblasen 10 aus dem Kompressionsraum 2 lediglich die Auftriebskraft F_{Bou} genutzt wird.

## Patentansprüche

1. Verfahren zur generativen Fertigung eines dreidimensionalen Werkstücks aus einer Schmelze (1), insbesondere Metallschmelze, bei dem die Schmelze (1) einem Kompressionsraum (2) zugeführt und mittels eines Druckpulses, der mit Hilfe eines den Kompressionsraum (2) begrenzenden hin- und herbeweglichen Kolbens (3) erzeugt wird, über ein Spritzloch (4) in Tropfenform ausgetragen wird,
**dadurch gekennzeichnet, dass** vor Fertigungsbeginn und/oder in einer Fertigungspause der Kompressionsraum (2) entgast wird, wobei in einem ersten Schritt Ultraschallwellen in die im Kompressionsraum (2) vorhandene Schmelze (1) eingekoppelt werden, welche eine Kraft erzeugen, die dazu führt, dass das in der Schmelze (1) vorhandene Gas absinkt, und in einem zweiten Schritt, nach Beendigung der Ultraschall-Anregung, der Kolben (3) tiefer in den Kompressionsraum (2) eingefahren wird, um das dann aufsteigende Gas über eine Führung (5) des Kolbens (3) auszutragen, wobei
die Ultraschallwellen mit Hilfe des Kolbens (3) in die Schmelze (1) eingekoppelt werden, der hierzu in eine hochfrequente Schwingung versetzt wird, wobei der Kolben (3) mit Hilfe eines Aktors (6) in Schwingung versetzt und/oder hin- und herbewegt wird.

2. Verfahren nach Anspruch 1,
**dadurch gekennzeichnet, dass** der Kolben (3) mit Hilfe eines magnetostriktiven, piezokeramischen und/oder magnetischen Aktors (6) in Schwingung versetzt und/oder hin- und herbewegt wird.

3. Verfahren nach einem der vorhergehenden Ansprüche,
**dadurch gekennzeichnet, dass** vor der Ultraschall-Anregung die im Bereich des Spritzlochs (4) vorhandene Schmelze (1) heruntergekühlt wird, bis die Soliduslinie der Schmelze (1) unterschritten wird.

4. Verfahren nach Anspruch 3,
**dadurch gekennzeichnet, dass** die im Bereich des Spritzlochs (4) vorhandene Schmelze (1) mit molekularem Stickstoff heruntergekühlt wird, der vorzugsweise mit Hilfe einer Lanze (7) von außen an das Spritzloch (4) herangeführt wird.

## Claims

1. Method for the generative manufacture of a three-dimensional workpiece from a molten material (1), in particular a molten metal, in which method the molten material (1) is fed to a compression chamber (2) and discharged in drop form via a spray hole (4) by means of a pressure pulse generated by means of a reciprocating piston (3) that delimits the compression chamber (2),
**characterized in that** the compression chamber (2) is degassed before manufacturing begins and/or during a pause in manufacture, wherein, in a first step, ultrasonic waves are coupled into the molten material (1) present in the compression chamber (2), which generate a force (F_{Bjrk}) that makes the gas in the molten material (1) sink, and, in a second step, after the ultrasonic excitation has ended, the piston (3) is moved deeper into the compression chamber (2) in order to discharge the gas, which is then rising, via a guide (5) for the piston (3), wherein
the ultrasonic waves are coupled into the molten material (1) by means of the piston (3), which is set into highfrequency oscillation for this purpose, wherein the piston (3) is set into oscillation and/or moved backward and forward by means of an actuator (6).

2. Method according to Claim 1,
**characterized in that** the piston (3) is set into oscillation and/or moved backward and forward by means of a magnetostrictive, piezoceramic and/or magnetic actuator (6).

3. Method according to any of the preceding claims, **characterized in that**, before the ultrasonic excitation, the molten material (1) present in the region of the spray hole (4) is cooled down until it falls below the solidus line of the molten material (1).

4. Method according to Claim 3,
**characterized in that** the molten material (1) present in the region of the spray hole (4) is cooled down with molecular nitrogen, which is preferably fed to the spray hole (4) from the outside by means of a lance (7).

## Revendications

1. Procédé de fabrication additive d'une pièce tridimensionnelle à partir d'une matière en fusion (1), en particulier d'un métal en fusion, procédé dans lequel la matière en fusion (1) est acheminée vers un espace de compression (2) et est évacuée sous forme de gouttes par le biais d'un trou de projection (4) au moyen d'une impulsion de pression qui est générée à l'aide d'un piston à mouvement alternatif (3) délimitant l'espace de compression (2),
**caractérisé en ce que** la chambre de compression (2) est dégazée avant le démarrage de la production et/ou lors d'une interruption de la production, des ondes ultrasonores étant injectées par couplage, dans une première étape, dans la matière en fusion (1) présente dans l'espace de compression (2), ce qui génère une force qui fait descendre le gaz présent dans la matière (1) et, une fois l'excitation ultrasonore terminée, le piston (3) est enfoncé, dans une deuxième étape, plus profondément dans l'espace de compression (2) pour évacuer le gaz ascendant par le biais d'un guide (5) du piston (3),
les ondes ultrasonores étant injectées par couplage dans la matière en fusion (1) à l'aide du piston (3) qui est mis pour cela en vibration à haute fréquence, le piston (3) étant mis en vibration et/ou étant déplacé suivant un mouvement alternatif à l'aide d'un actionneur (6).

2. Procédé selon la revendication 1,
**caractérisé en ce que** le piston (3) est mis en vibration et/ou est déplacé suivant un mouvement alternatif à l'aide d'un actionneur magnétostrictif, piézocéramique et/ou magnétique (6).

3. Procédé selon l'une des revendications précédentes,
**caractérisé en ce que**, avant l'excitation par ultrasons, la matière en fusion (1) présente dans la zone du trou de projection (4) est refroidie jusqu'à ce que la matière en fusion (1) tombe au-dessous de la courbe solidus.

4. Procédé selon la revendication 3,
**caractérisé en ce que** la matière en fusion (1) présente dans la région du trou de projection (4) est refroidie avec de l'azote moléculaire qui est amené au trou de projection (4) depuis l'extérieur de préférence à l'aide d'une lance (7).
